# EUROPEAN PATENT SPECIFICATION

(11) **EP 4 126 471 B1**
(45) Date of publication and mention of the grant of the patent: **07.05.2025**
(21) Application number: 21715232.1
(22) Date of filing: 26.03.2021
(51) Int. Cl.: B25J 9/00, B25J 15/00, B25J 15/06, B25J 9/16, G05B 19/418

(54) **CONTROLLABLE GRIPPER FOR A PICK AND PLACE ROBOT**
STEUERBARER GREIFER FÜR EINEN BESTÜCKUNGSROBOTER
DISPOSITIF DE PRÉHENSION POUVANT ÊTRE COMMANDÉ POUR UN ROBOT PRENEUR-PLACEUR

(30) Priority: 03.04.2020 EP 20167919
(43) Date of publication of application: 08.02.2023
(73) Proprietor: BEUMER Group A/S, 8200 Aarhus N (DK)
(72) Inventor: NIELSEN, Ejnar, 8543 Hornslet (DK); SKYUM, Henrik Frank, 8370 Hadsten (DK)
(74) Representative: Plougmann Vingtoft a/s
(86) International application number: PCT/EP2021/057887
(87) International publication number: WO 2021/198058

(56) References cited:
- EP-A2- 3 106 271
- JP-A- 2001 239 484
- JP-A- 2019 005 869
- JP-A- H09 131 685
- KR-U- 20100 008 158
- US-A- 5 988 718
- US-B2- 9 004 846

## Description

### FIELD OF THE INVENTION

The present invention relates to grippers for robot systems. Specifically, the invention relates to a controllable gripper for picking up objects of various sizes and shapes, e.g. from a 3D bulk of objects.

### BACKGROUND OF THE INVENTION

Sorters, such as for sorting mail and/or parcels or the like, normally include a sorter system for transporting objects to a discharge position, and in accordance with a code or the like on the individual objects, the objects are received and discharged from the sorter at a given discharge position.

Objects are often inducted to the sorter from a number of inductions which receive an object in one end and they serve to accelerate the object and deliver the object at an empty space on the sorter. The inductions may be manually loaded with items, i.e. a person picks up individual items from a feeding conveyor, e.g. from a bulk, e.g. 3D bulk, and places them singulated and oriented on an induction. In sorter systems without automated inductions for handling the induction to the sorter, persons perform the rather unpleasant task of manually inducting objects to the sorter.

Various pick and place robots are known, see for example documents JP H09 131685 A and KR 2010 0008158 U. However, the task of picking up objects which are randomly sized, shaped and textured, and placed in bulk, e.g. on a continuous moving feeder, with a high throughput is complicated.

### SUMMARY OF THE INVENTION

Following the above description, it may be seen as an object of the present invention to provide a solution for a pick and place robot to be able to pick and place both large and small objects arriving in random order quickly, and which at the same time can pick up objects efficiently from bulk.

In a first aspect, the invention relates to a controllable gripper for a robot, the controllable gripper comprising
- a plurality of gripping members arranged to engage with a surface of an object to be gripped, wherein the plurality of gripping members are arranged in a controllable gripping configuration,
- a base part arranged for being moved by a robotic actuator,
- four arms connected to the base part , wherein each arm has at least one gripping member arranged at or near a distal end of the arm, and is slidably arranged relative to the base part, so as to allow the arm to move a position of the gripping member relative to the base part, and
- a controllable actuator system comprising at least two separately controllable rotation electric motors arranged to control position of the four arms relative to the base part,
wherein the four arms are arranged to move along respective axes which are perpendicular to a central vertical axis through the base part, and wherein the four arms are arranged to move in different directions relative to the base part, so as to allow the gripping members to form various gripping quadrangle sizes upon control of the controllable at least two separately controllable rotation electric motors.

Such controllable gripper is advantageous for a pick and place robot, since it can change its gripping configuration quickly to allow gripping of objects with a random order of different shapes and sizes. It has been found that the slidable arm principle allows a simple design with e.g. three or four arms of fixed lengths extending in different directions from the base part and still allows a large gripping area when fully extended, while occupying only a limited space in the most compressed state. This allows the gripper to be very flexible, e.g. for navigation in narrow spaces, which is important for gripping objects from bulk, especially a 3D bulk of objects. E.g. this allows gripping with suction cups on an object with a slanting surface, or for gripping a small object in a narrow space between two high objects, which requires that the gripper itself is very compact.

Thus, the gripper has been found to be highly suited for effectively gripping objects arriving in motion, even mixed types of objects with various sizes and shapes in bulk. Especially, an embodiment with four arms each with a suction cup has been tested on a gantry type robotic actuator, and a high rate of success has been obtained even at a high speed for picking and placing random objects arriving in bulk.

In the following preferred features and embodiments will be described.

By a central vertical axis of the base part is understood an axis from a top of the base part where the base part is arranged for connection to a robotic actuator, and to a bottom of the base part through a centre of the body of the base part, e.g. this axis robotic actuator.

In the following various terms are used for the way the arms are arranged to move positions of the gripping members. Thus, terms like move, slide, slide along length, and these are just examples to encompass various ways of implementing the arrangement of the arms to allow forming of various gripping configurations.

In a preferred embodiment, four elongated arms are connected to the base part, wherein the four arms are slidably arranged in different directions relative to the base part, so as to allow the four gripping members to form various gripping quadrangle sizes. Even with fixed length arms, four arms perpendicular to each other allows the gripper to be very compact in the compressed state, and still allow a large gripping area for handling of large object in an extended state.

Preferably, the plurality of arms are preferably slidably arranged so as to allow the arms to be controllably movably between a compressed state and an extended state. Especially, in the compressed state, the gripping members of all of the plurality of arms are at shortest possible distance from the base part, whereas in the extended state, the gripping members of all of the plurality of arms are at longest possible distance from the base part. In preferred embodiments comprising at least three arms, an area defined by positions of the gripping members in the compressed state and an area defined by positions of the gripping members in the extended state deviate by more than a factor of 2.0, such as more than 5.0, such as more than 10.0. This allows a flexible gripper that can grip objects of significantly different size, depending on the selected gripper configuration.

According to the invention, each arm has a suction cup mounted on or near its distal end, so as to allow gripping on a surface forming a plane which is parallel with an axis along the length of the arm.

In some embodiments, the actuator system comprises individually controllable actuators for individually controlling positions of respective arms of the plurality of arms. Alternatively, the actuator system comprises a controllable actuator arranged to control positions of at least two arms. Especially, one single controllable actuator is arranged to control positions of all arms, e.g. for control position of four arms.

In some embodiments, all of the plurality of arms are arranged to slide along respective axes which are perpendicular to a central axis through the base part. In some embodiments, at least two arms are arranged to slide along one common axis, or along two parallel axes closely spaced. Preferably, these axes are perpendicular to a central axis through the base part. This allows a compact design, e.g. with two sets of two arms each sharing one common axis, wherein one set of arms is arranged above the other set of arms. In a preferred embodiment, a first set of two arms are arranged to slide in opposite directions along a first set of parallel axes (e.g. one common axis), and wherein a first set of two arms are arranged to slide in opposite directions along a second set of parallel axes (e.g. another common axis). Especially the first and second set of axes may form an angle of 70°-110°, e.g. the first and second set of axes may be perpendicular to each other. Especially, both of said first and second set of axes may be perpendicular to a central axis through the base part.

The actuator system may comprise as least one of: a rotation electric motor, a linear electromagnetic actuator, a hydraulic cylinder, and a pneumatic cylinder. The controllable actuator may comprises at least one controllable electric motor connected to control position of at least one of the at least two arms. The controllable electric motor may be connected to control position of at least two of the at least two arms. Especially, the at least one controllable electric motor may be mounted on a position which is fixed in relation to a part of the robotic actuator. This is especially preferred, if the controllable gripper is mounted to the robotic actuator via a tilting and/or rotation element, since thereby the mass and dimensions of the electric motor will not influence the agility of the gripper. This allows the use of a more powerful electric motor, thus further increasing the agility speed of the gripper, e.g. with respect to change between various gripping configurations at high speed. This may be obtained, if the at least one controllable electric motor is mounted on a part which is rotatable and tiltable in relation to the base part.

In some embodiments, a first controllable electric motor is connected to actuate at least a first arm by means of rotation applied via a first cable connection, and wherein a second controllable electric motor is connected to actuate at least a second arm by means of rotation applied via a second cable connection. Especially, first controllable electric motor may be connected to actuate a first set of two arm in opposite direction by means of rotation applied via the first cable connection, and wherein the second controllable electric motor is connected to actuate a second set of two arms in opposite direction by means of rotation applied via the second cable connection. Specifically, the first set of two arms may be arranged to slide along a first common axis, and wherein the second set of two arms are arranged to slide along a second common axis. Specifically, the first and second axes may form an angle of 70°-110°, such as the first and second axes being perpendicular to each other. Both of said first and second axes may be perpendicular to a central axis through the base part. Such rotation cable connections allow the electric motor to be positioned away from the fastest moving parts of the gripper.

In preferred embodiments, a controllable rotation element serves to connect the base part to a robotic actuator, so as to allow the base part to perform a controllable rotation around a rotation axis. In preferred embodiments, a controllable tilting element serves to connect the base part to the robotic actuator, so as to allow the base part to perform a controllable tilt around a tilting axis. Especially, the base part of the gripper may be mounted with a controllable rotation element and a controllable tilting element to the robotic actuator. Especially, the tilting axis is preferably perpendicular to the rotation axis.

In embodiments comprising at least one gripping member comprises one or more suction cups for engaging with a surface of the object for gripping the object, a controllable vacuum system is preferably connected to apply vacuum to the one or more suction cups.

In some embodiments, the at least two arms are formed by elements having a fixed length. This provides a simple design. Alternatively, at least one of the at least two arms comprises a telescopic element to allow adjustment of a length of the at least one arm. Such telescopic arrangement allows an even more flexible gripping configuration.

In some embodiments, at least one suction cup for gripping the object, wherein said at least one suction cup is mounted with a fixed position on the base part, such as a central part of the base part. Such extra suction cup may improve grip of the object that may allow even faster handling without loosing the object, especially for large and heavy objects.

In an embodiment, a first rotation electric motor is arranged to actuate a first pair of arms, and wherein a second rotation electric motor is arranged to actuate a second pair of arms. Especially, the first rotation electric motor is arranged to move the arms of the first pair of arms in opposite directions upon rotation in one direction, and wherein the second rotation electric motor is arranged to move the arms of the second pair of arms in opposite directions upon rotation in one direction. Especially, the first pair of arms may be arranged to move along a first axis, and wherein the second pair of arms are arranged to move along a second axis, such as the first and second axes being perpendicular to a vertical central axis of the base part. The first and second rotation electric motors may arranged with their respective axes of rotation being parallel with a vertical central axis of the base part, and more specifically their respective axes of rotation may be perpendicular to axes of movement of the first and second pair of arms. The first and second rotation electric motors may be mounted on the base part B above the axes of movements of the two pair of arms. Preferably, the motors are designed to be slim, so as to only contribute only in a limited way to the overall size of the base part.

In one embodiment, the first and second rotation electric motors are arranged to transfer rotation for actuation of the arms via a transmission means, such as a belt, and a rotation cable. Other transmission means may be used, such as a chain, a wire, a gear mechanism or the like.

In a second aspect, the invention provides a pick and place robot comprising
- the controllable gripper according to the first aspect,
- a robotic actuator arranged to move the controllable gripper, and
- a control system arranged to control the robotic actuator and to control the gripping configuration of the plurality of gripping members so as to grip an object and to place the object at a target position.

Preferably, the pick and place robot is arranged to grip the object from a continuously moving stream of objects in bulk, and to place the object singulated at a target position on an induction to a sorter or directly on a sorter. In other embodiments, the robot is arranged to grip the object from a static bulk of objects, e.g. to empty the bulk of objects before receiving another bulk of objects from a feeding conveyor or a disc etc.

In preferred embodiments, the controllable robotic actuator comprises a Cartesian type of robot actuator, e.g. a gantry type of robotic actuator. Specifically, a gantry type of robotic actuator has been found advantageous for use with the controllable gripper to be able to pick and place randomly sized and shaped objects from bulk.

Especially, the control system may be arranged to control the gripping configuration of the plurality of gripping members in response to at least one property of the object determined from an image, e.g. a 3D image, of the object, e.g. an image provide upstream of a position of the pick and place robot, in case of picking objects from a continuously moving stream of objects. Especially, the control algorithm is preferably arranged to control the controllable actuator system to cause the gripping members to form a gripping configuration determined in response to said at least on property of the object. Specifically, the control system is arranged to control the gripping configuration of the plurality of gripping members so as to match a size of the object determined from said image. Further, the control algorithm may be arranged to control a tilting of the base part of the controllable gripper in response to a detected tilting of a surface of the object to be gripped, and/or to control a rotation of the base part of the controllable gripper in response to a detected orientation of the object to be gripped.

Specifically, the control system may be arranged to control the gripping configuration of the plurality of gripping members in response to a plurality of inputs determined from said image, wherein said plurality of inputs comprises at least one of, such as more of or all of: information regarding a 3D shape of the object, a horizontal boundary of the object, a size of the object, an orientation of the object, an upper surface curvature of the object, and a surface roughness of the object. Specifically, said plurality of inputs comprises information regarding an upper surface of the object, e.g. one or more of: location of areas with wrinkles, location of plane surface parts, an angle and orientation of tilting of the upper surface. Especially, the control algorithm may be arranged to control the controllable gripper to avoid placing a gripping member to engage with the object in an area with a wrinkle of the surface of the object. Especially, the control algorithm is arranged control the controllable robotic actuator and the controllable gripper to place at least one gripping member in an area with a plane surface of the object. Especially, the control algorithm is arranged to control the controllable robotic actuator and the controllable gripper so as to place a gripping member near all four corners of the object, if the object is detected to have a rectangular shape.

In preferred embodiments, the control system is arranged to receive an image of an object after being placed at the target position as a feedback with respect to a rate of success of picking and placing objects. The control system may be arranged to modify control parameters for controlling the gripping configuration of the plurality of gripping members in response to said feedback, so as to improve a rate of success of picking and placing objects. Especially, the control system may be arranged to process a plurality of images of objects after being placed, and to accordingly modify a control algorithm of the control system with respect to arrive at modified control parameters for controlling the controllable gripper so as to grip the object, so as to improve a rate of success of picking and placing objects. This allows the pick and place robot to online improve its strategy for selecting a suitable gripping configuration adaptively to the actual objects, thereby increasing the rate of success.

Specifically, the control system may be arranged to control the controllable actuator system to allow the controllable gripper to enter a predetermined gripping configuration of the plurality of gripping members along with the robotic actuator moving the controllable gripper to a position for gripping the object. Thus, this increases speed, since the gripper may change the gripping configuration simultaneously with being moved by the robotic actuator.

In some embodiments, the control system is arranged to determine which object to grip among a plurality of objects identified in an image, wherein the control system is arranged to
- analyse said image, preferably a 3D image, and extract a plurality of different parameters indicative of the plurality of objects identified,
- calculate a score value for each of the plurality of objects identified in response to said plurality of different parameters in accordance with a predetermined score algorithm,
- compare said score values and select the object to grip in response to a result of said comparison,
- select the object to grip as the object among the plurality of objects identified which has the best overall score value, and
- control the controllable robotic actuator and the controllable gripper to grip the selected object. Specifically, the control system may be arranged to receive an image of an object after being placed at the target position as a feedback with respect to determining which object to grip among the plurality of objects identified, such as having a learning algorithm arranged to modify one or more parameters in said predetermined score algorithm, based on a plurality of images of the objects after being placed at the target position, so as to improve pick and place performance. Also here, the control system can adaptively and continuously via online feedback improve pick and place performance.

In a third aspect, the invention provides a sorter system comprising
- a conveyor, e.g. arranged for continuously moving, arranged to transport objects of various shapes and sizes in bulk,
- a sorter arranged to receive singulated objects, and
- a pick and place robot according to the second aspect arranged to pick up an object from the conveyor and to place the object singulated and oriented on an induction to the sorter or directly on the sorter.

In a fourth aspect, the invention provides use of the controllable gripper according to the first aspect for handling objects comprising at least one of: mail pieces, parcels, baggage, items handled at a warehouse distribution, and items handled at a mail order distribution centre.

In a fifth aspect, the invention proivdes use of the pick and place robot according to the second aspect for handling objects comprising at least one of: mail pieces, parcels, baggage, items handled at a warehouse distribution, and items handled at a mail order distribution centre.

In a sixth aspect, the invention provides use of the sorter system according to the third aspect for handling objects comprising at least one of: mail pieces, parcels, baggage, items handled at a warehouse distribution, and items handled at a mail order distribution centre.

In a seventh aspect, the invention provides a method for gripping an object, the method comprising
- providing a controllable gripper with four arms slidably arranged in different directions relative to a base part by means of a controllable actuator system comprising two rotation electric motors, wherein a gripping member arranged to engage with a surface of the object to be gripped is positioned at or near an end of each of said arms,
- receiving an input indicative of properties of the object to be gripped, wherein said properties comprises at least a size of the object,
- determining a gripping configuration of the gripping members for gripping the object in response to said input indicative of properties of the object to be gripped,
- controlling at least one of the two rotation electric motors for moving at least one of said arms to provide the predetermined gripping configuration of the gripping members,
- moving the controllable gripper to a predetermined position for gripping the object, and
- gripping the object by means of the gripping members after the predetermined gripping configuration of the gripping members has been entered, and after the controllable gripper has entered the predetermined position.

Especially, the controllable gripper may have a suction cup as gripping member on each of the four arms for cooperating in gripping a surface of the object, the method further comprises
- applying a vacuum to the suction cups for gripping the object, and
- releasing the vaccum to the suction cups for releasing the object.

The individual aspects of the present invention may each be combined with any of the other aspects. These and other aspects of the invention will be apparent from the following description with reference to the described embodiments.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
FIGs. 1a and 1b illustrate simple sketches of preferred characteristics of a gripper embodiment in an extended and in a compressed state,
FIGs. 2a-2f illustrate various views and states of a gripper embodiment with four suction cups,
FIGs. 3a-3h illustrate various views and states of another gripper embodiment with four suction cups,
FIG. 4 illustrates a block diagram of a robot system embodiment,
FIG. 5 illustrates a block diagram of another robot system embodiment,
FIG. 6 illustrates a gripper embodiment with four suction cups mounted on a gantry type robotic actuator,
FIG. 7 illustrates steps of a method embodiment, and
FIGs. 8a-8c illustrate various view of still another gripper embodiment with four suction cups and two motors for actuating arms via belts.

### DETAILED DESCRIPTION OF AN EMBODIMENT

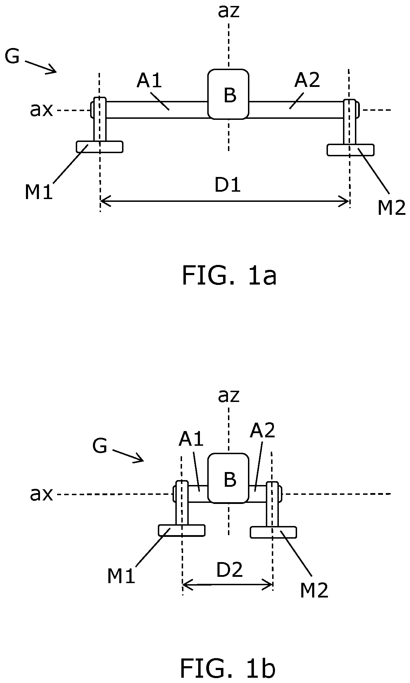

FIGs. 1a and 1b illustrates a sketch of a simple controllable gripper G embodiment in two different states. FIG. 1a illustrates an extended state for gripping large objects, and FIG. 1b illustrates a compressed state for gripping small objects and for easy navigation in narrow space.

The controllable gripper G has a base part B which serves to be mounted or directly or indirectly connected to a robotic actuator for allowing the robotic actuator to move the gripper G to a position for gripping an object.

In the illustrated embodiment, the gripper G has two gripping member M1, M2 in the form of suction cups which can grip onto a surface of an object by application of a vacuum or suction force. The two suction cups M1, M2 are mounted near distal ends of two slidable arms A1, A2 which are connected to the base part B. The arms A1, A2 are slidably arranged along its length relative to the base part B, so as to allow the arms A1, A2 to move positions of the suction cups M1, M2 relative to the base part between an extended state as in FIG. 1a, and in a compressed state as in FIG. 1b. An actuator, not shown, serves to actuate forth and back movement of the arms A1, A2 in opposite directions along an axis ax relative to the base part B in a controllable manner. Thereby the distance D1 between the suction cups M1, M2, is adjustable, and thus the gripper G can provide different gripping configurations to adjust for optimal gripping of objects of different sizes. Distance D1 in FIG. 1a, in the extended state, is preferably significantly larger than the corresponding distance D2 in the compressed state in FIG. 1b. As seen, the suction cups M1, M2 are mounted to the arms A1, A2 by members extending perpendicular to the axis ax of extension of the arms A1, A2.

As seen, the arms A1, A2 are slidably arranged along axis ax which is perpendicular to the central axis az through the base part B. Hereby, the most optimal extension of the gripping configuration can be obtained and still allows a compact dimension in the compressed state with the arms A1, A2.

E.g. an actuator can be an electric motor rotation motor actuating the arms A1, A2 e.g. by means of a gear meshing arrangement inside the base part B. A linear type of actuator may also be used.

The arms A1, A2 can especially be formed compact, if one arm A1 is arranged to allow the other arm A2 to slide inside, thus allowing a compact and yet simple design. If preferred, the arms A1, A2 can be telescopic to allow further length adjustment to increase the difference between distances D1, D2 in extended and compressed states, however the arms A1, A2 can also be of fixed length.

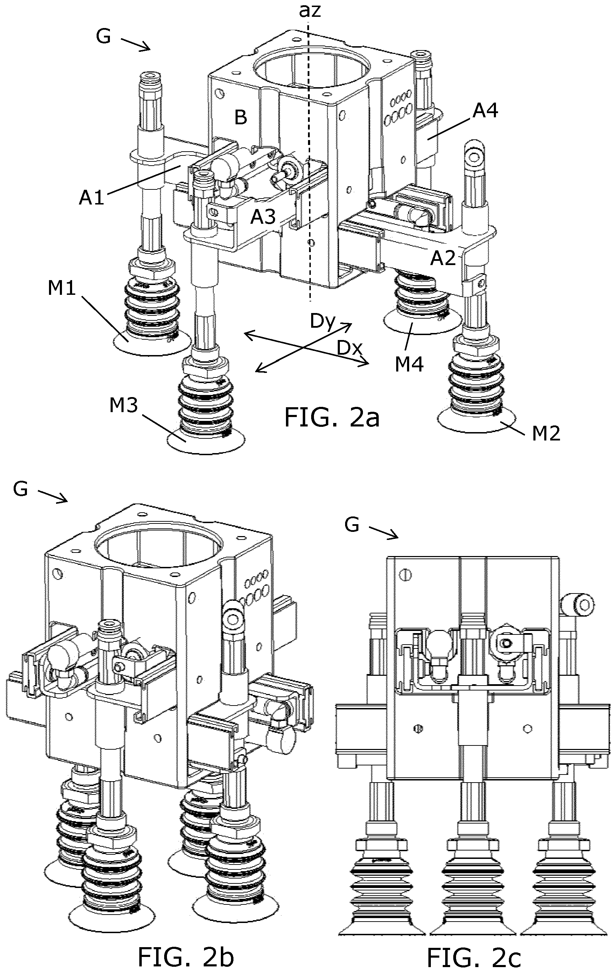

FIGs. 2a-2f illustrates different views and states of a gripper G embodiment with four arms A1, A2, A3, A4 which are pairwise arranged to slide in opposite directions Dx, Dy perpendicular to each other. One pair of arms A1, A2 can slide along axis Dx, whereas arms A3, A4 can slide along axis Dy. Each of the arms A1, A2, A3, A4 has one suction cup M1, M2, M3, M4 mounted close to its distal end. The four arms A1, A2, A3, A4 are arranged to extend in four different directions in one plane, perpendicular to each other. The embodiment shown in FIGs. 2a-2f may be suited for versions where the arms A1, A2, A3, A4 are actuated individually by respective linear actuators.

The suction cups M1, M2, M3, M4 are shown with a bellow like structure which serves to allow the suction cups M1, M2, M3, M4 to be resiliently arranged in a direction perpendicular to the slide axes Dx, Dy which allows a force to be applied onto the surface to grip, thereby improving the grip, also on a non-plane or non-smooth surface.

The base part B here shown as a rectangular structure through which the arms A1, A2, A3, A4 can slide so that the slide axes Dx, Dy are perpendicular to an axis az through a centre of the base part B. An upper part of the base part B is arranged for mounting directly or indirectly onto a robotic actuator. The arms A1, A2, A3, A4 slide on track elements mounted in the base part B.

In FIG. 2a the arms are in an extended state, i.e. with the gripping configuration where the arms are extended so that the suction cups M1, M2, M3, M4 define the largest possible quadrangle size. Thus, in this state, the suction cups M1, M2, M3, M4 can grip to a surface of a large object, whereas FIGs. 2a and 2b show two different views of the gripper G in a compressed state. The suction cups M1, M2, M3, M4 shown to be are aligned with their suction contacts forming a plane, and wherein this plane is parallel with axes Dx, Dy.

In the embodiment of FIGs. 2a-2f, the arms A1, A2, A3, A4 are arranged to slide pairwise parallel with each other. Arms A1, A2 slide parallel with each other, whereas arms A3, A4 slide parallel with each other. Especially, arms A1 and A2 may also be arranged to slide inside each other. Arms A3, A4 may likewise arranged to slide inside each other, so as to be slidably arranged along axis Dy.

Depending on the chosen type of actuation, all four arms A1, A2, A3, A4 can be actuated separately to allow a high degree of flexibility with respect to gripping configuration, but requiring separate actuator. Alternatively, two actuators can be used to actuate the arms A1, A2, A3, A4 in two pairs A1, A2, and A3, A4, and further one single actuator can be used to actuate all four arms A1, A2, A3, A4, thus allowing only limited variation in the gripping configuration. It may be preferred that the actuator(s) e.g. electric motor(s), for the arms is/are mounted above the tiling and rotation points, to allow reduction of weight of the gripper G. A rotation cable may transfer rotation power from the motor(s) to actuate the arms A1, A2, A3, A4 by means of a gear mechanism inside the base part B. In case of individually adjustable lengths of all four arms A1, A2, A3, A4, various gripping configuration shapes can be made to fit optimal grips for irregular objects.

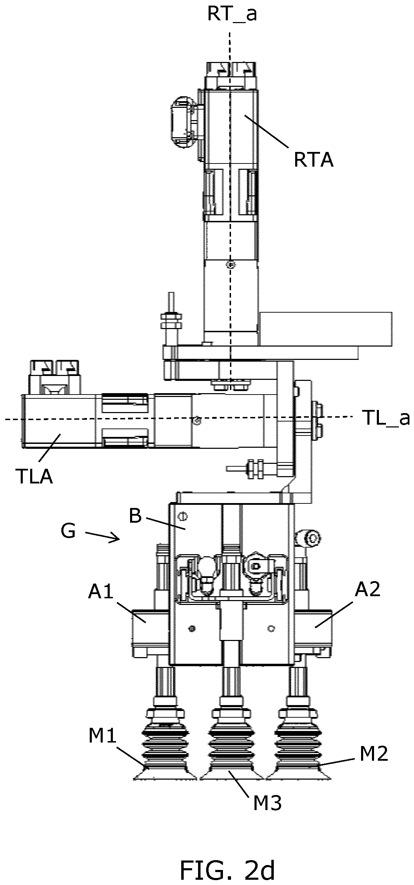

In FIG. 2d the gripper G embodiment is shown with the base part B mounted with a tilting element with a controllable tilting actuator TLA arranged to tilt the base part B and thus the gripper G around a tilting axis TL_a. Further, the base part B is mounted via a rotation element with a controllable rotation actuator RTA arranged to rotate the base part B and thus the gripper G around a rotation axis RT_a. These actuators TLA, RTA can be such as electric servo motors.

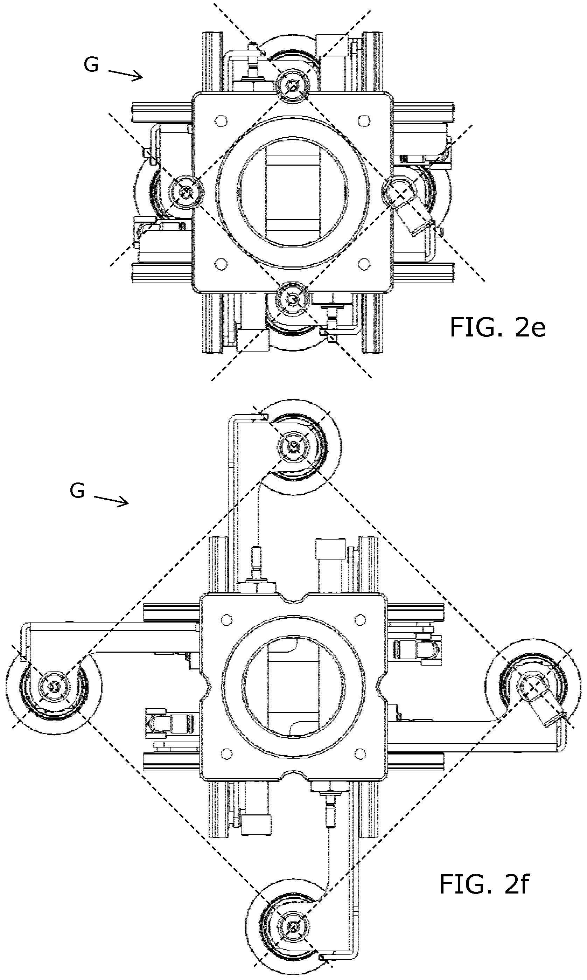

FIG. 2e shows an upper view of the gripper G in compressed state, whereas FIG. 2f shows an upper view of the gripper in an extended state. As seen, the gripper G is highly flexible with respect to provide a compact gripping configuration in the compressed state, while a significantly larger gripping configuration is still possible in the extended state. The difference in areas defined by centre positions of the suction cups in compressed and the extended states deviate clearly, as seen by the dashed lines, such as between a factor of 2-3.

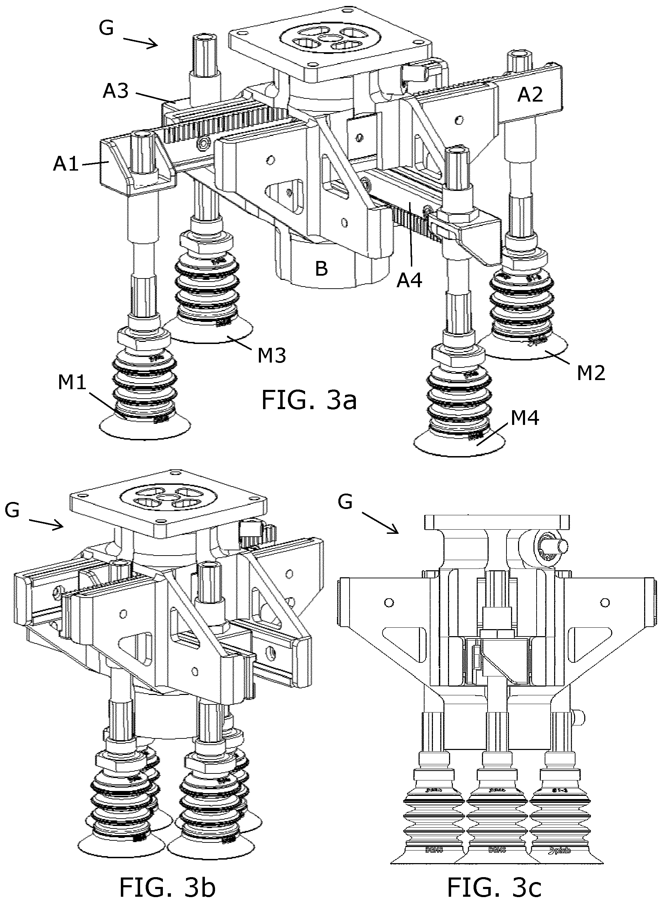

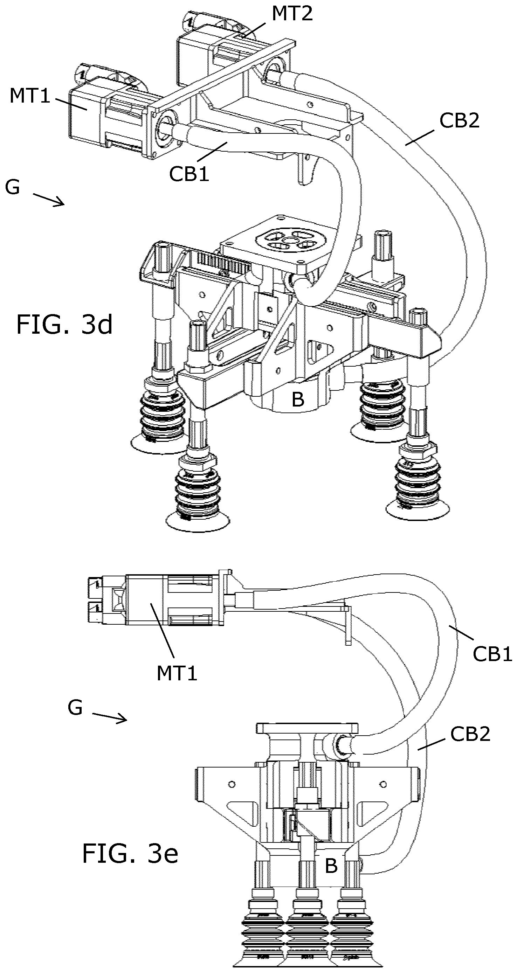

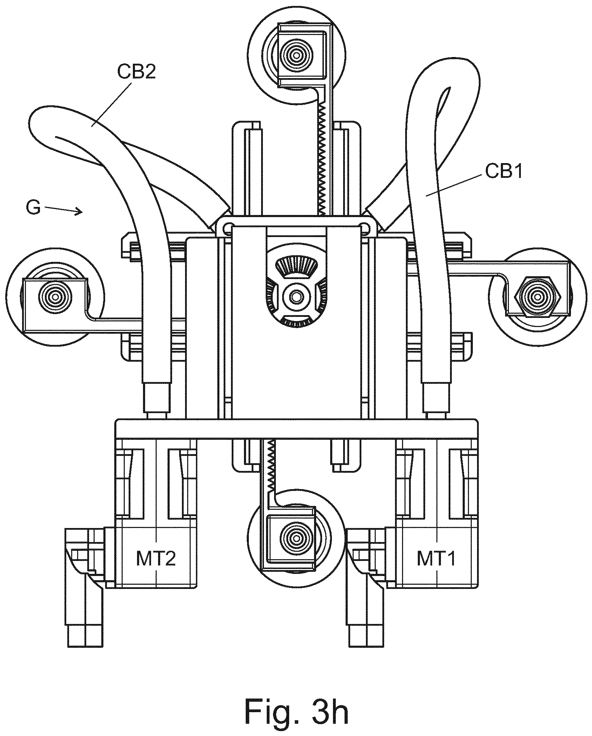

FIGs. 3a-3h show different views, details and states of another gripper G embodiment with four arms A1, A2, A3, A4 arranged to slide in four different directions in one plane, perpendicular to each other, and also with a suction cup M1, M2, M3, M4 arranged near distal ends of each of the arms A1, A2, A3, A4. The difference from the embodiment in FIGs. 2a-2f is that the embodiment in FIGs. 3a-3h has a base part B with gear wheels inside to drive each set of two arms A1, A2 and A3, A4 by means of respective controllable electric rotation motors MT1, MT2 as seen in FIGs. 3d, 3e and 3h. The electric motors MT1, MT2 are connected to the base part B by means of rotation cables CB1, CB2 that serve to transfer rotation force from the motor to the gear wheels inside the base part B, thereby actuating the arms A1, A2, A3, A4 to slide forth and back to a desired gripping configuration. By individual control of the motors, the two pairs of arms A1, A2 and A3, A4 can be independently controlled, thus the gripper G can provide a gripping configuration where one set of arms A1, A2 is in compressed state, while the other set of arms A3, A4 is in the extended state, thus providing a gripping configuration which may be preferred for gripping long and narrow objects.

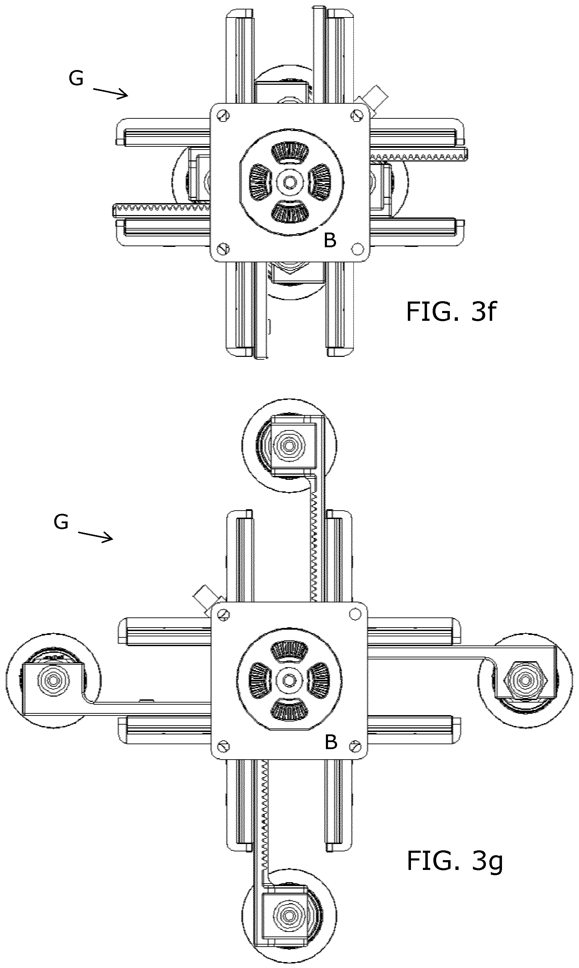

FIG. 3a shows the gripper G embodiment in an extended state, while FIGs. 3b and 3c illustrate the gripper G in the compressed state. FIGs. 3d and 3e illustrate the electric motors MT1, MT2 and the rotation cables CB1, CB2 connected to the base part B, where the gripper G is in the extended state. The electric motors MT1, MT2 are shown mounted on one common element which is preferably mounted on a part which moves along with the robotic actuator, i.e. it is preferably mounted above a rotation or tilting actuator which are preferably interconnecting the robotic actuator and the base part B of the gripper G to allow the gripper G to tilt and rotate in relation to a part of the robotic actuator which merely serves to move the base part B in space. This saves space and mass for the motors MT1, MT2 on the gripper G itself, thereby allowing a more compact design which helps to increase its navigation properties and its speed of motion, such as tilting and rotation. FIGs. 3f and 3g show the gripper G in upper views, in a compressed and an extended state, respectively. FIG. 3h shows the same components as in FIG. 3d but in an upper view.

It is to be understood that the described gripper G embodiments can be made by a suitable metal, a composite, or polymeric materials, such as known by the skilled person, to provide the strength and durability according to the requirement for a certain application. The suction cup gripping members and associated controllable vacuum system are known components within the field of pick and place robots.

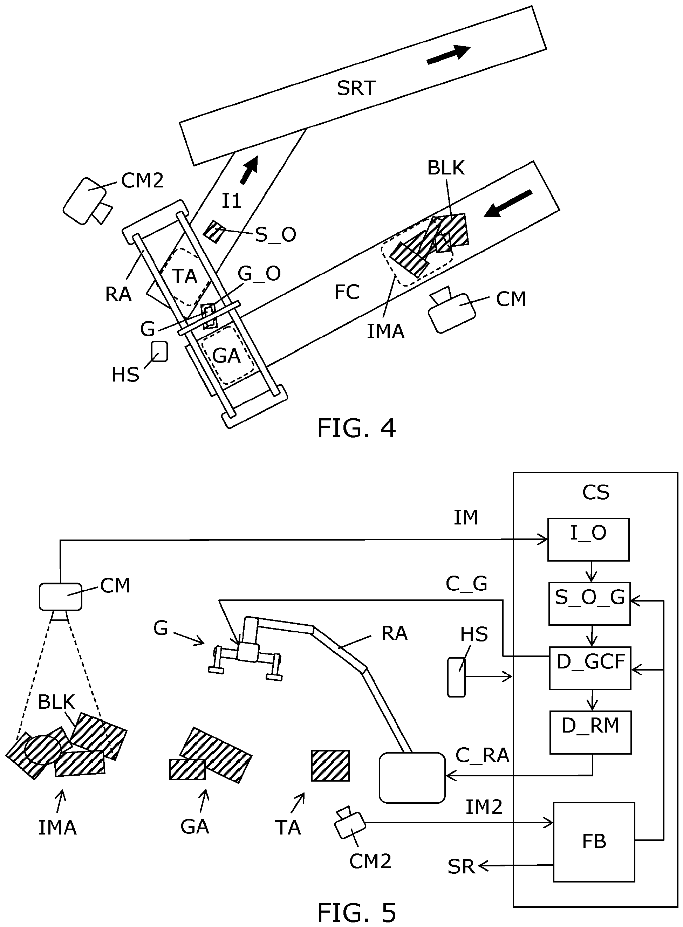

FIG. 4 and FIG. 5 illustrate a pick and place robot embodiment arranged to pick with a controllable gripper G embodiment. The pick and place robot can pick an object G_O from a continuously moving feeding conveyor FC transporting a stream of objects in bulk BLK, or from a static bulk moving forward in steps, and to place the object S_O singulated and oriented at a target position TA on an induction I1 to a sorter SRT.

The robot system comprises a pick and place robot RA, G, an sensor system CM, CM2, and a control system CS with a processor system arranged to execute a control algorithm. The pick and place robot RA, G has a controllable robotic actuator RA serving to move a controllable gripper G for gripping objects. The embodiments of FIGs. 4 and 5 basically have the same elements but differ with respect to the level of details, and with respect to the robotic actuator RA, but in the following, both embodiments will be described as a whole.

In FIG. 4, the robotic actuator RA is a gantry type actuator, i.e. it has a fixed part with one set of elongated elements mounted on the ground in one end adjacent to the feeding conveyor FC and in the opposite end adjacent to the induction I1, so as to allow a movable part of the robotic actuator RA to move along the elongated elements to move a controllable gripper G between a gripping area GA where to pick up and object G_O on the feeding conveyor FC and to a target area TA on the induction I1. The robotic actuator RA has a movable part serving to move along the elongated elements by means of a controllable actuator, and the movable part further has a controllable actuator serving to move the gripper G perpendicular to the elongated elements, and a still further actuator serving to move the gripper G in a vertical direction. Thus, altogether the robotic actuator RA can move the gripper G to a position within a space covering the gripping area GA and the target position or target area TA. In FIG. 5 the robotic actuator RA is illustrated as a robotic manipulator arm comprising at least three joints or axes, e.g. a six degrees of freedom type of robot. The joints may be rotational joints or a combination of hinges and rotational joints. In preferred versions, the first robot comprises a base, wherein the manipulator arm extends from the base. Especially, the base may be mountable fixed to a floor or ground between the feeding conveyor FC and the sorter SRT. Preferably, the robotic manipulator arm has an extension making it capable of placing an item at a target area TA at least a horizontal distance of 1 meter away from the gripping area GA where it has picked up the item.

The controllable gripper G, seen in FIG. 5, can be any of the above described embodiments, but for simplicity, the gripper G is here illustrates as in FIGs. 1a. Optimal grip is important for the robot to allow handling of objects G_O at a high speed without loosing grip of the object G_O when being moved at a high acceleration rate towards the target position TA. A preferred gripper G is compact, thus allowing in the compressed state to grip a small object placed between two higher objects, and yet allows the suction cups in the extended state to grip large objects. The gripper G preferably has suction cups as gripping members, since suction cups have been found to be able to grip a large variety of objects G_O irrespective of its surface texture, surface shape and orientation, such as ranging from small objects such as a piece of clothes only wrapped in a rather fluffy thin plastic bag, and up to large rectangular cardboard boxes with a weight of several kg. The controllable gripping configuration of the gripper G is actuated by an actuator in the gripper G, but for simplicity the actuator is here understood as placed inside the base part of the gripper G.

The gripper G is preferably mounted to the robotic actuator RA so that it can rotate and tilt in relation to the position where it is mounted on the robotic actuator RA. This allows the gripper G to tilt and rotate to adapt to the orientation and tilting of an upper surface of any object in the bulk BLK for getting the most optimal grip on the object G_O.

The basic input to the pick and place robot RA, G, CS is a sensor image system, e.g. an image or vision system with a 3D camera CM mounted on a fixed position to provide a 3D image IM of an image area IMA upstream of the position of the pick and place robot RA, G. The image area IMA preferably covers the entire width of the feeding conveyor FC and at least a length to cover the expected longest objects in the bulk BLK stream of objects. It has been found that such 3D image IM of incoming bulk objects BLK provides a sufficient input for precise control system CS of the pick and place robot RA, G without the need to have a camera or other sensor mounted on the moving part of the robotic actuator RA or gripper G. The image area IMA is preferably located such as at least 0.5 m to 2.0 m upstream of the gripping area GA in case of a moving bulk of objects, which has been found as suitable to allow for reaction time of the robotic actuator RA and gripper G. The basic concept for control of the pick and place robot RA, G for picking up an object is that the provided image IM and a known speed of the feeding conveyor FC is sufficient to determine the exact time and location of the object to be gripped in the gripping area GA, and thus is used in the control system CS to determine control signals G_C, C_RA for controlling the gripper and robotic actuator, respectively.

Various types of cameras CM exist, but preferably the CM is capable of providing a high quality 3D image allowing a precise identification of shapes to allow identification of separate objects in the bulk BLK, and also with a sufficient precise height dimension to allow precise navigation of the gripper G for gripping the object G_O selected for being gripped. The camera CM may especially be a 3D line camera, a Time of Flight type 3D camera, and a stereo 3D camera. Further, it is to be understood that a 2D camera may be used, where the height dimension of the 3D image IM is computed based on image processing of a 2D photo, or it may be obtained by an alternative technology, e.g. a separate height sensor placed separate from the camera CM.

A height sensor HS, e.g. a camera or other type of sensor, is placed to sense a height of a gripped object G_O. Since only an image IM taken from a position above the bulk BLK of objects is available, it may occur that a small object is gripped G_O from a position on top of a larger object. Thus, upon gripping, only the height of the surface of the upper object is known, and thus the actual height of the object gripped G_O is generally unknown. By the height sensor HS, the height of the gripped object G_O is sensed, and this information is used in the control of the gripper G and robotic actuator RA for placing the object G_O, or more specifically, to determine the height above the target area TA where to release the object G_O. This ensures that even fragile objects G_O can be handled without releasing the object G_O high above the target area TA, thus potentially damaging the object G_O or even misplacing the object G_O. The height sensor can be placed near the gripping area GA or near the target area TA, or between the gripping area GA and target area TA.

The control system CS receives the 3D image IM and executes a control algorithm with a number of elements for generating control signals C_G, C_RA for control of the controllable gripper G and the robotic actuator RA, respectively. First, the 3D image is processed according to an object identification algorithm I_O to identify separate objects in the image IM of the incoming bulk BLK. Especially, this algorithm seeks to identify candidate objects for being picked by means of image processing techniques utilizing preferably the 3D information in the separation of single objects from the bulk BLK. At this stage, a number of parameters may be determined for each identified object to be used in the next step, image processing techniques, such as known in the art.

Next, based on the identified possible objects to be picked, a selection algorithm S_O_G is performed to select which object to be gripped next. The selection algorithm S_O_G is preferably based on analysis of the 3D image IM to extract a plurality of different parameters indicative of the plurality of objects identified to allow, based on the parameters, which object to grip based on a number of predetermined criteria or a balance of such criteria, e.g. an estimated speed of gripping the object to provide a high overall efficiency, and an estimated chance of success of gripping and placing the object. A non-exhaustive list of parameters that can be determined based on the image IM indicative of each of the plurality of identified objects are: 1) A distance between the object and a current position of the gripper G, 2) A distance between the object and a target position TA where to place the object, 3) A texture of an upper surface of the object, 4) A curvature of an upper surface of the object, 5) A tilting of an upper surface of the object. This may be taken into account, 6) A height of an upper surface of the object compared to a height of surrounding objects, 7) Dimensions of the object, 8) A type of the object, 9) A shape of the object, 10) A quality of a part of said image IM covering the object. Especially, the selection algorithm S_O_G to select which object to be gripped next may involve calculating a score value for each of the plurality of objects identified in response to the selected two or more of the parameters 1)-10) in accordance with a predetermined score algorithm which involves a balancing of the various parameters to obtain the desired efficiency versus rate of success balance. The score values determined for each of the objects is then compared, and the object to be gripped next is then selected as the object with the best score value.

After having selected the next object to grip, a control signal C_G is generated by an algorithm part D_GCF determining the gripping configuration of the plurality of gripping members M1, M2 based on properties of the selected object to be gripped, determined from the 3D image IM. These properties are preferably already determined, as explained above, in the object selection algorithm S_O_G. Especially, the shape and specifically the shape of the upper surface of the selected object is used to determine a control signal C_G to control the actuator in the gripper G to adjust its arms in order to bring its suction cups in a desired gripping configuration. Especially, with a gripper G having four suction cups, the gripper G is controlled to form a gripping quadrangle size matching the shape and size of the upper surface of the object to grip. This may be determined based on a number of parameters so as to provide the best possible position of each of the suction cups on the upper surface of the object to grip based on various knowledge, such as to place the suction cups near corners of a plane rectangular surface. Especially, a non-exhaustive list of possible inputs to the algorithm D_GCF determining the gripping configuration are:
1) Information regarding a shape of the object.
2) A horizontal boundary of the object.
3) A size of the object.
4) An orientation of the object.
5) An upper surface curvature of the object.
6) A surface roughness of the object.

All of or some of the above inputs 1)-6) can be processed in the gripping configuration algorithm D_GCF to control the gripper G to determine the gripping configuration to best match the object to be gripped. The precise gripping configuration can be designed to allow the best possible grip depending on the above parameters 1)-6), where the overall principle is to provide a gripping configuration which seeks to place suction cups towards the boundary of a plane surface, whether it may be selected to provide a smaller gripper configuration for a large object, if it has an irregular shape but has a well defined, but smaller, plane upper surface area which can be suitable for placing of all suction cups. For irregular objects, the selection of preferred suction cup positions and thus the gripping configuration will be a compromise. For the best grip by the suction cups on a curved surface, a smaller gripping configuration may be preferred. For a small object, and assumingly also a light weight object, the gripping configuration may be chosen to best match the surface roughness, e.g. to avoid placing suction cups at or near wrinkles of an object being a plastic foil covering a piece of clothes.

Especially, to save time, when the algorithm D_GCF has selected the gripper configuration to be used, the control system CS sends a control signal C_G to the actuator in the gripper G serving to actuate its arms to bring into the determined position for the selected gripping configuration before or simultaneously with the robotic actuator RA moving the gripper G to the gripping area, so that the suction cups are already in the desired configuration for quickly gripping the object, when the gripper G reached the object and is rotated and tilted to the best match for gripping the object at the gripping area GA.

Next, after having decided about the gripping configuration of the gripper G, a robot movement control algorithm D_RM determines where to and how to control the robotic actuator RA to move the robotic actuator RA for positioning the gripper G to a position for gripping the selected object. This can be determined from some of the already mentioned parameters determined for the selected object, e.g. the above mentioned inputs 1)-6) for the algorithm D_GCF determining gripper configuration, such as tilting of the upper surface of the object. Further, taking into account the movement speed of the object in the transport direction of the feeding conveyor FC, it is calculated exactly where within the gripping area GA, in space, and exactly also when, the suction cups will be brought into contact with the surface of the object for gripping the object. The robot movement control algorithm D_RM then sends control signals C_RA for controlling movement of the robotic actuator RA including suitable control signals for actuators serving to tilt and rotate of the gripper G. The suction cups are then activated by controlling a vacuum system connected to the suction cups to apply suction to grip the object.

By keeping track of the orientation of the object, also based on the 3D image IM and the mentioned parameters already determined, the control system CS controls the controllable robotic actuator RA to move the gripper G and the object to a target position within the target area TA and to control tilting and rotation of the gripper G for releasing the object singulated and oriented at the target position, i.e. aligned with the direction of movement of the induction I1. Based on the input from the height sensor HS, the release height above the target area TA is determined, i.e. the height at which to release vacuum suction to the suction cups M1, M2.

In the illustrated embodiments in FIGs. 4 and 5, a second camera CM2 is setup to cover the target area TA in order to provide an image IM2 of an object after being released by the gripper G at the target position within the target area TA. This allows the image IM2 to be used as a feedback to a feedback algorithm FB in the control system CS, since it can be determined if an object was successfully placed at the target position by appropriate image processing, e.g. comparing the image IM2 with the initial image IM provided by the camera CM before picking, so as to determine if the object was successfully picked and placed as a suitably positioned and aligned object S_O. This can be used to calculate a rate of success SR of picking and placing objects. The rate of success SR can be output to a user indicating the rate of success SR as a percentage of successfully handled objects over a period of time. The rate of success SR can further be used by the control algorithm to detect a possible failure alarm, e.g. by calculating statistics based on the rate of success SR over time. If a sudden drop in rate of success SR is detected, there may be a fault in the system, and an alarm can be generated.

Furthermore, the feedback algorithm FB may use the image IM2 as input to a machine learning part of the feedback algorithm FB. Especially, the feedback algorithm FB may involve an Artificial Intelligence algorithm and/or a neural network based algorithm that may analyse some of the already mentioned inputs or parameters determined in the initial 3D image IM for the object. This can be used to annotate the resulting image IM2 after placing the object, in order for the learning algorithm to learn specific features of objects which are successfully handled, and features of objects which may prove to create difficulties in handling. With the purpose of gradually improving pick and place performance, the feedback algorithm FB may use machine learning to adapt the selection of object to grip algorithm S_O_G and the gripper configuration determining algorithm D_GCF based on the experienced pick and place fails and successes. This may be done on the robot system before bringing the robot into normal operation, however it may be preferred that the learning algorithm operates online with the robot system in normal operation. This will allow the robot system to be flexible and adapt gradually to improved performance e.g. if various parameters change, e.g. the rate of incoming objects in bulk BLK, the type of objects. This allows the robot system to flexibly adapt to a high performance even if the operating conditions change, such as handling of a new type of objects.

As an example, the learning algorithm part of the feedback algorithm FB may be capable of modifying one or more parameters in the above-mentioned score algorithm of the selection of object to grip algorithm S_O_G. Thus, based on a plurality of images IM2 of the objects after being placed at the target position TA, the selection of object to grip algorithm S_O_G can be adapted to provide an improved overall performance of the robot system. Specifically, the learning algorithm may modify weighting factors in the score algorithm, so as to improve pick and place performance. Especially, some features or combination of features, may have proven to result in a so poor pick and place performance, that the selection of object to grip algorithm S_O_G may be designed to completely reject such object from picking, and to let the object instead continue on the feeding conveyor FC for manual handling.

As another example, the learning algorithm part of the feedback algorithm FB may be capable of modifying one or more parameters in the gripper configuration determining algorithm D_GCF. Specifically, the learning algorithm may modify one or more parameters in the processing of inputs used in the determination of the gripper configuration and/or precise position of suction cups in relation to a detected boundary of the object for a certain type of objects with special features or with a special combination of features.

The feedback algorithm FB may further be arranged to provide feedback to the object identification algorithm I_O, and to algorithm D_RM which determines movement of the robot, e.g. lowering the movement speed for moving certain gripped objects G_O which may have proven to be otherwise dropped.

The sorter SRT may comprise a plurality of supporting surfaces arranged to move along a track in a transporting direction, wherein the supporting surfaces define empty spaces for receiving and transporting objects or items. However, it is to be understood that the sorter SRT may be of a type as for example: a tilt-tray sorter, a cross-belt sorter, a tote based sorter, a pusher sorter, a shoe sorter, or a pop-up sorter. Especially, the sorter SRT may be a closed loop type of sorter SRT. Especially, the sorter SRT may be arranged to transport objects or items with a speed of at least 0.4 m/s, such as 0.5-1.0 m/s, such as 1.0-1.5 m/s, such as 1.5-2.0 m/s, such as more than 2.0 m/s. Especially, the sorter SRT may be arranged to transport objects or items at a constant speed. The sorter SRT may be part of a sorter system further comprising a plurality of discharges arranged for receiving items from the sorter SRT, wherein the discharges are arranged at different positions adjacent to the sorter SRT. The sorter system is thus arranged to discharge items from the sorter SRT at discharge locations selected in accordance with an identification code associated with the individual items. E.g. such identification code can be such as: a bar code, a postal code, an ID tag, RFID tag, or the like. By scanning the identification code of an item, the sorter system is capable of sorting the item accordingly.

The induction I1 may be arranged to receive an object or item S_O in one end and to accelerate the object or item so as to deliver the object or item in an empty space on the sorter SRT with a relative velocity to a velocity of the empty space on the sorter SRT, wherein said relative velocity is below a predetermined threshold.

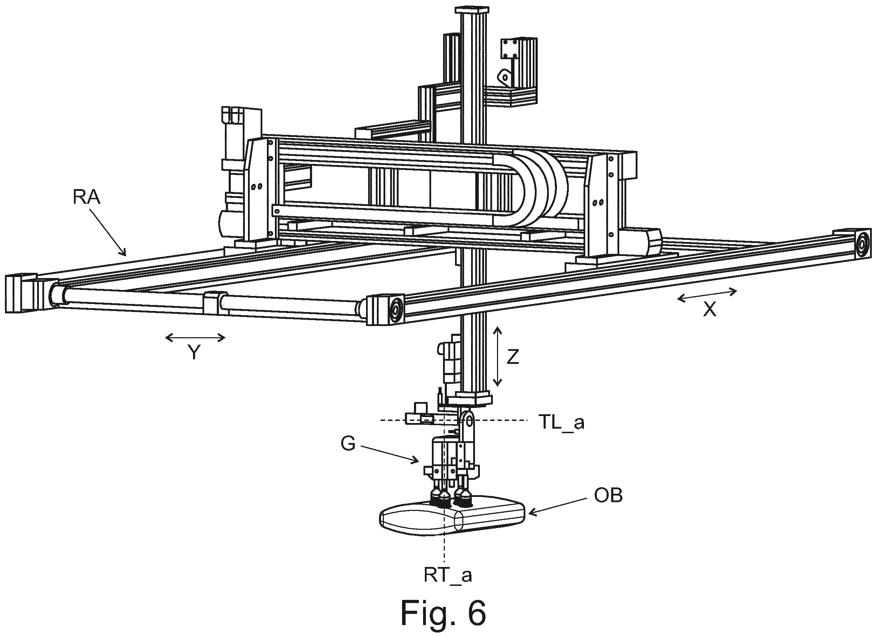

FIG. 6 illustrates a preferred robotic actuator RA in the form of a gantry robotic actuator with an adjustable gripper G with four suction cups, here shown with a gripped object OB. A set of horizontal elements forming tracks for a controllably movable first cart CT1 arranged to be controllably actuated to move in a horizontal direction X. A controllably movable second cart CT2 is arranged to be controllably actuated to move in another horizontal direction Y on tracks of the first cart CT1.

The gripper G is mounted on a member fixed to the second cart CT2 and is controllably movable in a vertical direction Z to allow height adjustment of the gripper G. The gripper G is shown mounted on this member by a controllable actuator element which allows controllable rotation around a vertical rotation axis RT_a. Further, the gripper is mounted on the member by a controllable actuator element which allows controllable tilting around a horizontal tilting axis TL_a.

The dimension of the various elements of the robotic actuator RA can easily be adapted to the required X, Y, Z distance capacity required for the pick and place robot, and also the strength of the various elements can be adapted for the load of objects to be handled. Various types of actuators for the X, Y, Z direction actuation can be used, as known in the art of gantry type of robots.

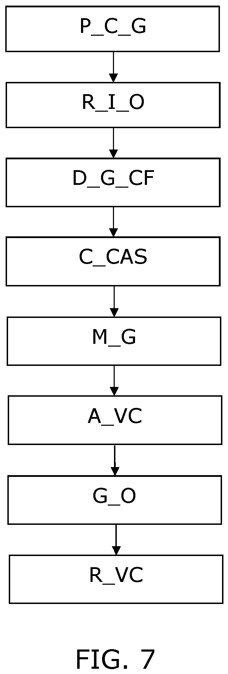

FIG. 7 illustrates steps of an embodiment for a method for gripping an object. First, providing P_C_G a controllable gripper with at least two arms slidably arranged in different directions relative to a base part by means of a controllable actuator system, wherein a gripping member comprising suction cups arranged to engage with a surface of the object to be gripped is positioned at or near an end of each of said arms. Next, receiving R_I_O an input indicative of properties of the object to be gripped, wherein said properties comprises at least a size of the object. In response to the properties of the object determining D_G_CF a gripping configuration of the gripping members for gripping the object in response to said input indicative of properties of the object to be gripped, e.g. based on an image, such as a 3D image, of the object. Next, controlling C_CAS the controllable actuator system for moving at least one of said at least two arms to provide the predetermined gripping configuration of the gripping members, e.g. to match a size of an upper surface of the object. Next, moving M_G the controllable gripper to a predetermined position for gripping the object, e.g. along with said control for the actuator system for determining gripping configuration, so that the time for moving the gripper is used for the gripper to enter the desired gripping configuration, thereby increasing speed of the gripping process. Further, after the gripper has been moved to the correct position, activating a vacuum A_V to allow the suction cups to engage with the surface of the object, thereby gripping the object G_O.

To place the object at a target position, the vacuum is released R_VC after the gripper with the object has been moved to the target position.

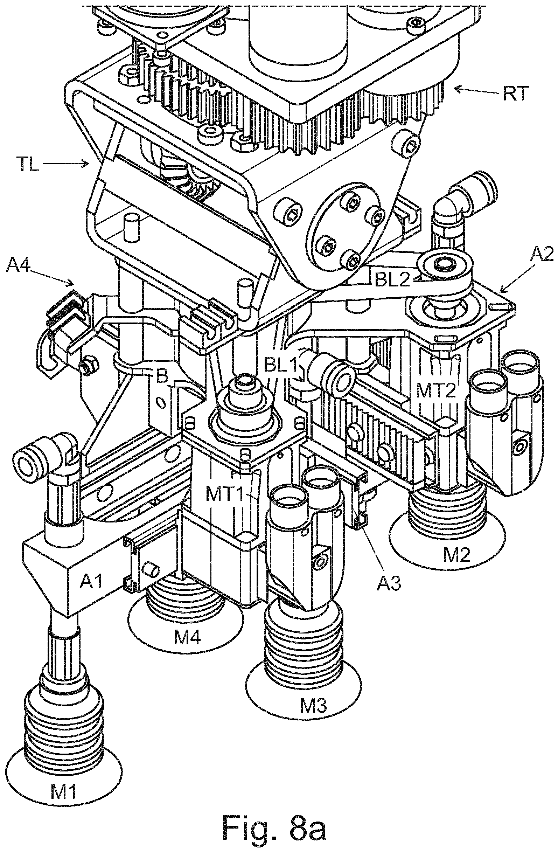

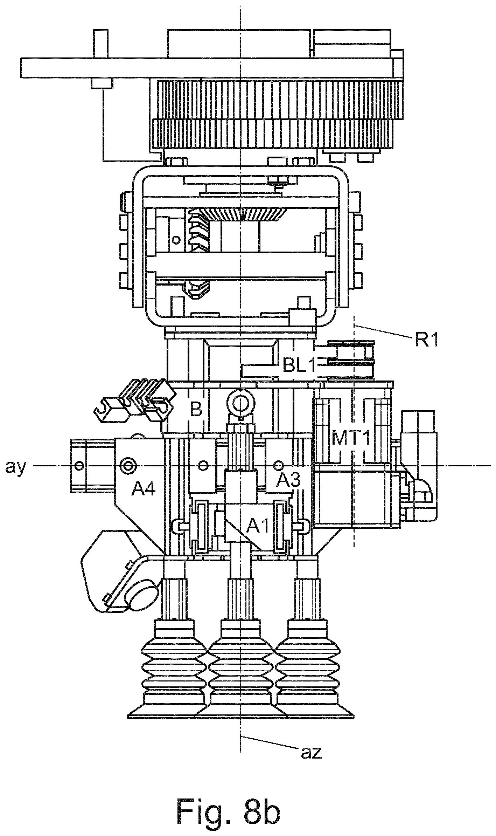

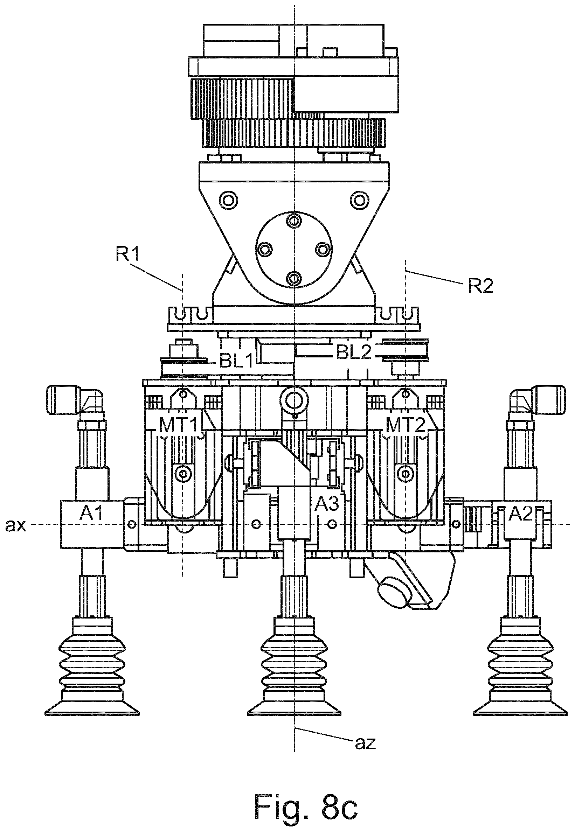

FIGs. 8a-8c illustrate various views of an embodiment with four arms A1-A4 each with one suction cup M1-M4, wherein the four arms A1-A4 are slidably arranged in relation to the central base part B. The base part B is connected to a robotic actuator via a rotation mechanism RT and a tilting mechanism TL. FIG. 8a shows a 3D view of the gripper embodiment, while FIGs. 8b and 8c show respective side views.

The arms A1-A4 can be actuated to slide pairwise by respective electric motors MT1, MT2 each driving respective actuation mechanisms via belts BL1, BL2, such as timing belts. One arm pair is formed by arms A1 and A2 and upon rotation of the electric motor MT1 in one direction the arms A1, A2 are connected to cause the suction cups M1, M2 to move away from the central base part B, while rotation of the electric motor MT1 in the opposite direction causes the arms A1, A2 to move the suction cups M1, M2 towards the central base part B. Likewise, the other electric motor MT2 is connected to cause the other arm pair A3, A4 to cause the suction cups M3, M4 to move away from the central base part B upon rotation in one direction. Upon rotation of the electric motor MT2 in the opposite direction, the arms A3 and A4 are caused to move the suction cups M3, M4 towards the central base part B. Each of the pair or arms A1, A2 and A3, A4 are connected to the respective electric motors MT1, MT2 so that the arms move in opposite directions. Thus, suction cups M1, M2 move in opposite directions upon rotation of the electric motor MT1, and suction cups M3, M4 move in opposite directions upon rotation of the electric motor MT2.

In the shown embodiment, the electric motors MT1, MT2 are mounted on the base part B, so that their axis of rotation R_1, R_2 are parallel, and further, their axis or rotation R_1, R_2 are parallel with a vertical central axis az of the base part B. Further, the arms A1-A4 are arranged to move along axes ax, ay perpendicular to the axis of rotation R_1, R_2 of the motors MT1, MT2. One arm pair A1, A2 is arranged to move along a first axis ax, and the other arm pair A3, A4 is arranged to move along a second axis ay, wherein the first and second axes ax, ay are perpendicular, however the first and second axes ax, ay may form another angle, such as an angle within 60°-90°, if preferred. Further, in the shown embodiment, the axes ax, ay are arranged in one plane.

The electric motors MT1, MT2 are preferably individually controllable, so that the position of suction cups M1, M2 can be controlled separate from the position of suction cups M3, M4. In this way a flexible selection of the suction cup configuration can be obtained to match objects to be gripped with various sizes and shapes.

The electric motors MT1, MT2 are arranged so that the belts BL1, BL2 serving to transfer rotation from the motors MT1, MT2 to actuation of the arms A1, A2, A3, A4 are arranged vertically above the axes of movement of the arms A1, A2, A3, A4.

In FIGs. 8a-8c the central axis az of the base part B coincides with the axis about which the base part B is mounted to rotate via the rotation mechanism RT. However, it is to be understood that the central axis az of the base part B may be displaced from this axis of rotation, e.g. the central axis az of the base part B may be parallel with said axis of rotation.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A controllable gripper (G) for a robot, the controllable gripper (G) comprising
- a plurality of gripping members (M1, M2) arranged to engage with a surface of an object to be gripped, wherein the plurality of gripping members (M1, M2) are arranged in a controllable gripping configuration,
- a base part (B) having a body and a top part which is arranged for connection to a robotic actuator, wherein a central vertical axis (az) through the base part (B) is an axis from the top of the base part (B) and to a bottom of the base part (B) through a centre of the body of the base part (B),
- four arms (A1, A2, A3, A4) connected to the base part (B), wherein each arm (A1, A2, A3, A4)
- has at least one gripping member (M1) comprising a suction cup mounted on or near its distal end, so as to allow gripping on a surface forming a plane which is parallel with an axis along the length of the arm (A1), and
- is slidably arranged relative to the base part (B), so as to allow the arm (A1, A2, A3, A4) to move a position (D1, D2) of the gripping member (M1, M2, M3, M4) relative to the base part (B), and
- a controllable actuator system comprising at least two separately controllable rotation electric motors (MT1, MT2) arranged to control position of the four arms (A1, A2, A3, A4) relative to the base part (B),
wherein the four arms (A1, A2, A3, A4) are arranged to move along respective axes (ax, ay) which are perpendicular to the central vertical axis (az) through the base part (B), and wherein the four arms (A1, A2, A3, A4) are arranged to move in different directions relative to the base part (B), so as to allow the gripping members (M1, M2, M3, M4) to form various gripping quadrangle sizes upon control of the at least two separately controllable rotation electric motors (MT1, MT2).

2. The controllable gripper according to any of the preceding claims, wherein the plurality of arms are slidably arranged so as to allow the arms to be controllably movably between a compressed state and an extended state, wherein in the compressed state, the gripping members of all of the plurality of arms are at shortest possible distance from the base part, whereas in the extended state, the gripping members of all of the plurality of arms are at longest possible distance from the base part.

3. The controllable gripper according to claim 2, wherein an area defined by positions of the gripping members (M1, M2, M3, M4) in the compressed state and an area defined by positions of the gripping members (M1, M2, M3, M4) in the extended state deviate by more than a factor of 2.0.

4. The controllable gripper according to any of the preceding claims, wherein two arms (A1, A2) are arranged to slide in opposite directions along two parallel axes (ax).

5. The controllable gripper according to any of the preceding claims, wherein the controllable actuator system comprises at least one controllable electric motor connected to control position of at least one of the arms, wherein the at least one controllable electric motor is connected to actuate the at least one arm by means of rotation applied via a cable connection.

6. The controllable gripper according to claim 5, wherein the at least one controllable electric motor is mounted on a position which is fixed in relation to a part of the robotic actuator, or wherein the at least one controllable electric motor is mounted on a part which is at least rotatable or tiltable in relation to the base part.

7. The controllable gripper according to any of the preceding claims, comprising a controllable rotation element (RT) for connection to the robotic actuator, so as to allow the base part (B) to perform a controllable rotation around a rotation axis (RT_a, az), and comprising a controllable tilting element (TL) for connection to the robotic actuator, so as to allow the base part (B) to perform a controllable tilt around a tilting axis (TL_a).

8. The controllable gripper according to any of the preceding claims, wherein a first rotation electric motor (MT1) is arranged to actuate a first pair of arms (A1, A2), and wherein a second rotation electric motor (MT2) is arranged to actuate a second pair of arms (A3, A4).

9. The controllable gripper according to claim 8, wherein the first and second rotation electric motors (MT1, MT2) are arranged to transfer rotation for actuation of the arms (A1, A2, A3, A4) via a transmission means, and wherein the transmission means comprises at least one of: a belt, a chain, a wire, a gear mechanism, and a rotation cable.

10. The controllable gripper according to claim 8 or 9, wherein the first and second rotation electric motors (MT1, MT2) are mounted on the base part B.

11. A pick and place robot comprising
- the controllable gripper (G) according to any of claims 1-10,
- a robotic actuator (RA) arranged to move the controllable gripper (G), and
- a control system (CS) arranged to control the robotic actuator (RA) and to control the gripping configuration of the plurality of gripping members (M1, M2) so as to grip an object and to place the object at a target position (TA).

12. Use of the controllable gripper according to any of claims 1-10 for handling objects comprising at least one of: mail pieces, parcels, baggage, items handled at a warehouse distribution, and items handled at a mail order distribution centre.

## Patentansprüche

1. Steuerbarer Greifer (G) für einen Roboter, wobei der steuerbare Greifer (G) Folgendes umfasst:
- eine Vielzahl von Greifelementen (M1, M2), die angeordnet sind, um in eine Oberfläche eines zu greifenden Objekts einzugreifen, wobei die Vielzahl von Greifelementen (M1, M2) in einer steuerbaren Greifkonfiguration angeordnet ist,
- ein Basisteil (B), das einen Körper und ein oberes Teil aufweist, das zur Verbindung mit einem Roboteraktor angeordnet ist, wobei eine zentrale vertikale Achse (az) durch das Basisteil (B) eine Achse von der Oberseite des Basisteils (B) und zu einer Unterseite des Basisteils (B) durch eine Mitte des Körpers des Basisteils (B) ist,
- vier Arme (A1, A2, A3, A4), die mit dem Basisteil (B) verbunden sind, wobei jeder Arm (A1, A2, A3, A4)
- mindestens ein Greifelement (M1) aufweist, das einen Saugnapf umfasst, der an oder nahe seinem distalen Ende montiert ist, um ein Greifen an einer Oberfläche zu ermöglichen, die eine Ebene bildet, die parallel zu einer Achse entlang der Länge des Arms (A1) ist, und
- relativ zu dem Basisteil (B) verschiebbar angeordnet ist, um zu ermöglichen, dass sich der Arm (A1, A2, A3, A4) relativ zu dem Basisteil (B) in eine Position (D1, D2) des Greifelements (M1, M2, M3, M4) bewegt, und
- ein steuerbares Aktorsystem, das mindestens zwei separat steuerbare Drehelektromotoren (MT1, MT2) umfasst, die angeordnet sind, um eine Position der vier Arme (A1, A2, A3, A4) relativ zu dem Basisteil (B) zu steuern,
wobei die vier Arme (A1, A2, A3, A4) angeordnet sind, um sich entlang jeweiliger Achsen (ax, ay) zu bewegen, die senkrecht zu der zentralen vertikalen Achse (az) durch das Basisteil (B) verlaufen, und wobei die vier Arme (A1, A2, A3, A4) angeordnet sind, um sich relativ zu dem Basisteil (B) in unterschiedliche Richtungen zu bewegen, um es den Greifelementen (M1, M2, M3, M4) zu ermöglichen, verschiedene Greifviereckgrößen bei Steuerung der mindestens zwei separat steuerbaren Drehelektromotoren (MT1, MT2) zu bilden.

2. Steuerbarer Greifer nach einem der vorhergehenden Ansprüche, wobei die Vielzahl von Armen verschiebbar angeordnet ist, um zu ermöglichen, dass die Arme zwischen einem zusammengefahrenen Zustand und einem ausgefahrenen Zustand steuerbar beweglich sind, wobei sich die Greifelemente von allen der Vielzahl von Armen in dem zusammengefahrenen Zustand in kürzestmöglicher Entfernung von dem Basisteil befinden, während sich die Greifelemente von allen der Vielzahl von Armen in dem ausgefahrenen Zustand in größtmöglicher Entfernung von dem Basisteil befinden.

3. Steuerbarer Greifer nach Anspruch 2, wobei ein durch Positionen der Greifelemente (M1, M2, M3, M4) in dem zusammengefahrenen Zustand definierter Bereich und ein durch Positionen der Greifelemente (M1, M2, M3, M4) in dem ausgefahrenen Zustand definierter Bereich um mehr als einen Faktor von 2,0 abweichen.

4. Steuerbarer Greifer nach einem der vorhergehenden Ansprüche, wobei zwei Arme (A1, A2) angeordnet sind, um in entgegengesetzte Richtungen entlang zweier paralleler Achsen (ax) zu gleiten.

5. Steuerbarer Greifer nach einem der vorhergehenden Ansprüche, wobei das steuerbare Aktorsystem mindestens einen steuerbaren Elektromotor umfasst, der mit einer Steuerposition von mindestens einem der Arme verbunden ist, wobei der mindestens eine steuerbare Elektromotor verbunden ist, um den mindestens einen Arm mittels einer Drehung zu betätigen, die über eine Kabelverbindung aufgebracht wird.

6. Steuerbarer Greifer nach Anspruch 5, wobei der mindestens eine steuerbare Elektromotor an einer Position montiert ist, die in Bezug auf ein Teil des Roboteraktors fixiert ist, oder wobei der mindestens eine steuerbare Elektromotor an einem Teil montiert ist, das in Bezug auf das Basisteil mindestens drehbar oder kippbar ist.

7. Steuerbarer Greifer nach einem der vorhergehenden Ansprüche, umfassend ein steuerbares Drehelement (RT) zur Verbindung mit dem Roboteraktor, um zu ermöglichen, dass das Basisteil (B) eine steuerbare Drehung um eine Drehachse (RT_a, az) ausführt, und umfassend ein steuerbares Kippelement (TL) zur Verbindung mit dem Roboteraktor, um zu ermöglichen, dass das Basisteil (B) ein steuerbares Kippen um eine Kippachse (TL_a) ausführt.

8. Steuerbarer Greifer nach einem der vorhergehenden Ansprüche, wobei ein erster Drehelektromotor (MT1) angeordnet ist, um ein erstes Paar von Armen (A1, A2) zu betätigen, und wobei ein zweiter Drehelektromotor (MT2) angeordnet ist, um ein zweites Paar von Armen (A3, A4) zu betätigen.

9. Steuerbarer Greifer nach Anspruch 8, wobei der erste und der zweite Drehelektromotor (MT1, MT2) angeordnet sind, um eine Drehung zur Betätigung der Arme (A1, A2, A3, A4) über ein Übertragungsmittel zu übertragen, und wobei das Übertragungsmittel mindestens eines der Folgenden umfasst: einen Riemen, eine Kette, einen Draht, einen Zahnradmechanismus und ein Drehkabel.

10. Steuerbarer Greifer nach Anspruch 8 oder 9, wobei der erste und der zweite Drehelektromotor (MT1, MT2) an dem Basisteil B montiert sind.

11. Bestückungsroboter, umfassend
- den steuerbaren Greifer (G) nach einem der Ansprüche 1-10,
- einen Roboteraktor (RA), der angeordnet ist, um den steuerbaren Greifer (G) zu bewegen, und
- ein Steuersystem (CS), das angeordnet ist, um den Roboteraktor (RA) zu steuern und um die Greifkonfiguration der Vielzahl von Greifelementen (M1, M2) zu steuern, um ein Objekt zu greifen und das Objekt an einer Zielposition (TA) zu platzieren.

12. Verwendung des steuerbaren Greifers nach einem der Ansprüche 1-10 zum Handhaben von Objekten, umfassend mindestens eines des Folgenden:
Postsendungen, Pakete, Gepäck, Artikel, die in einer Lagerverteilung gehandhabt werden, und Artikel, die in einem Versandzentrum gehandhabt werden.

## Revendications

1. Dispositif de préhension pouvant être commandé (G) pour un robot, le dispositif de préhension pouvant être commandé (G) comprenant
- une pluralité d'éléments de préhension (M1, M2) agencés pour venir en prise avec une surface d'un objet à saisir, dans lequel la pluralité d'éléments de préhension (M1, M2) sont agencés dans une configuration de préhension pouvant être commandée,
- une partie de base (B) ayant un corps et une partie supérieure qui est agencée pour une connexion à un actionneur robotique, dans lequel un axe vertical central (az) à travers la partie de base (B) est un axe depuis le haut de la partie de base (B) jusqu'au bas de la partie de base (B) à travers un centre du corps de la partie de base (B),
- quatre bras (A1, A2, A3, A4) reliés à la partie de base (B), dans lequel chaque bras (A1, A2, A3, A4)
- comporte au moins un élément de préhension (M1) comprenant une ventouse montée sur ou à proximité de son extrémité distale, de manière à permettre la préhension sur une surface formant un plan qui est parallèle à un axe le long de la longueur du bras (A1), et
- est agencé de manière coulissante par rapport à la partie de base (B), de manière à permettre au bras (A1, A2, A3, A4) de déplacer une position (D1, D2) de l'élément de préhension (M1, M2, M3, M4) par rapport à la partie de base (B), et
- un système d'actionneur pouvant être commandé comprenant au moins deux moteurs électriques de rotation pouvant être commandés séparément (MT1, MT2) agencés pour commander la position des quatre bras (A1, A2, A3, A4) par rapport à la partie de base (B),
dans lequel les quatre bras (A1, A2, A3, A4) sont agencés pour se déplacer le long d'axes respectifs (ax, ay) qui sont perpendiculaires à l'axe vertical central (az) à travers la partie de base (B), et dans lequel les quatre bras (A1, A2, A3, A4) sont agencés pour se déplacer dans différentes directions par rapport à la partie de base (B), de manière à permettre aux éléments de préhension (M1, M2, M3, M4) de former diverses tailles de quadrilatères de préhension lors de la commande des au moins deux moteurs électriques de rotation pouvant être commandés séparément (MT1, MT2).

2. Dispositif de préhension pouvant être commandé selon l'une quelconque des revendications précédentes, dans lequel la pluralité de bras sont agencés de manière coulissante afin de permettre aux bras de pouvoir être commandés en mobilité entre un état comprimé et un état étendu, dans lequel, dans l'état comprimé, les éléments de préhension de la totalité de la pluralité de bras sont à la plus courte distance possible de la partie de base, tandis que dans l'état étendu, les éléments de préhension de la totalité de la pluralité de bras sont à la plus longue distance possible de la partie de base.

3. Dispositif de préhension pouvant être commandé selon la revendication 2, dans lequel une zone définie par des positions des éléments de préhension (M1, M2, M3, M4) dans l'état comprimé et une zone définie par des positions des éléments de préhension (M1, M2, M3, M4) dans l'état étendu divergent de plus d'un facteur de 2,0.

4. Dispositif de préhension pouvant être commandé selon l'une quelconque des revendications précédentes, dans lequel deux bras (A1, A2) sont agencés pour coulisser dans des directions opposées le long de deux axes parallèles (ax).

5. Dispositif de préhension pouvant être commandé selon l'une quelconque des revendications précédentes, dans lequel le système d'actionneur pouvant être commandé comprend au moins un moteur électrique pouvant être commandé connecté pour commander la position d'au moins l'un des bras, dans lequel l'au moins un moteur électrique pouvant être commandé est connecté pour actionner l'au moins un bras au moyen d'une rotation appliquée via une connexion de câble.

6. Dispositif de préhension pouvant être commandé selon la revendication 5, dans lequel l'au moins un moteur électrique pouvant être commandé est monté sur une position qui est fixe par rapport à une partie de l'actionneur robotique, ou dans lequel l'au moins un moteur électrique pouvant être commandé est monté sur une partie qui est au moins rotative ou inclinable par rapport à la partie de base.

7. Dispositif de préhension pouvant être commandé selon l'une quelconque des revendications précédentes, comprenant un élément de rotation pouvant être commandé (RT) pour une connexion à l'actionneur robotique, de manière à permettre à la partie de base (B) d'effectuer une rotation pouvant être commandée autour d'un axe de rotation (RT_a, az), et comprenant un élément d'inclinaison pouvant être commandé (TL) pour une connexion à l'actionneur robotique, de manière à permettre à la partie de base (B) d'effectuer une inclinaison pouvant être commandée autour d'un axe d'inclinaison (TL_a).

8. Dispositif de préhension pouvant être commandé selon l'une quelconque des revendications précédentes, dans lequel un premier moteur électrique de rotation (MT1) est agencé pour actionner une première paire de bras (A1, A2), et dans lequel un second moteur électrique de rotation (MT2) est agencé pour actionner une seconde paire de bras (A3, A4).

9. Dispositif de préhension pouvant être commandé selon la revendication 8, dans lequel les premier et second moteurs électriques de rotation (MT1, MT2) sont agencés pour transférer la rotation pour l'actionnement des bras (A1, A2, A3, A4) via un moyen de transmission, et dans lequel le moyen de transmission comprend au moins l'un de : une courroie, une chaîne, un fil, un mécanisme d'engrenage et un câble de rotation.

10. Dispositif de préhension pouvant être commandé selon la revendication 8 ou 9, dans lequel les premier et second moteurs électriques de rotation (MT1, MT2) sont montés sur la partie de base B.

11. Robot preneur-placeur comprenant
- le dispositif de préhension pouvant être commandé (G) selon l'une quelconque des revendications 1 à 10,
- un actionneur robotisé (RA) agencé pour déplacer le dispositif de préhension pouvant être commandé (G), et
- un système de commande (CS) agencé pour commander l'actionneur robotique (RA) et pour commander la configuration de préhension de la pluralité d'éléments de préhension (M1, M2) de manière à saisir un objet et à placer l'objet à une position cible (TA).

12. Utilisation du dispositif de préhension pouvant être commandé selon l'une quelconque des revendications 1 à 10 pour manipuler des objets comprenant au moins l'un parmi : des envois postaux, des colis, des bagages, des articles manipulés dans un entrepôt de distribution, et des articles manipulés dans un centre de distribution de vente par correspondance.
